# EUROPEAN PATENT APPLICATION

(11) **EP 4 183 992 A1**
(43) Date of publication of application: **24.05.2023**
(21) Application number: 21209858.6
(22) Date of filing: 23.11.2021
(51) Int. Cl.: F02B 75/04, F16C 3/28, F16F 15/28

(54) **AN ECCENTRIC MEMBER AND AN INTERNAL COMBUSTION ENGINE**

(71) Applicant: Gomecsys B.V., 1411 AR Naarden (NL)
(72) Inventor: De Gooijer, Lambertus Hendrik, 1401 EP BUSSUM (NL)
(74) Representative: De Vries & Metman

(57) **Abstract**

An eccentric member (5) to be mounted between a crankpin (4) of a crankshaft (2) and a big end of a connecting rod (7) of an internal combustion engine (1) including variable compression ratio comprises a cylindrical inner wall (18) having a first centreline (10), a cylindrical outer wall (6) having a second centreline (19) extending parallel to the first centreline (10) and an annular driving body (5) that is located next to the cylindrical outer wall (6) in axial direction thereof and having a centreline which coincides with the first centreline (10). The first and second centrelines (10, 19) span a first plane which intersects the outer wall (6) at a line of maximum lift (20) and a line of minimum lift (21). The first centreline (10) also lies within a second plane that extends perpendicularly to the first plane, which second plane divides the eccentric member (5) in a high-lift section (5a) in which the line of maximum lift (20) is located and a low-lift section (5b) in which the line of minimum lift (21) is located. The high-lift section (5a) is provided with at least a slot (22, 23, 24, 28) which extends in its circumferential direction and/or wherein the low-lift section (5b) is provided with a counterweight (9, 29).

## Description

The present invention relates to an eccentric member to be mounted between a crankpin of a crankshaft and a big end of a connecting rod of an internal combustion engine including variable compression ratio, comprising a cylindrical inner wall having a first centreline, a cylindrical outer wall having a second centreline extending parallel to the first centreline and an annular driving body that is located next to the cylindrical outer wall in axial direction thereof and having a centreline which coincides with the first centreline, wherein the first and second centrelines span a first plane which intersects the outer wall at a line of maximum lift and a line of minimum lift, wherein the first centreline also lies within a second plane that extends perpendicularly to the first plane, which second plane divides the eccentric member in a high-lift section in which the line of maximum lift is located and a low-lift section in which the line of minimum lift is located.

An internal combustion engine including such an eccentric member is known from EP 3 365 544. In the known internal combustion engine the eccentric member gear meshes with a first stage gear. The first stage gear is fixed to a second stage gear that has a smaller diameter than the first stage gear. The first and second intermediate stage gears are rotatably mounted to a crankshaft of the engine and have a common axis of rotation which extends parallel to a crankshaft axis of the crankshaft. The known engine further comprises an actuating gear which meshes with the second stage gear and which is fixed to an actuating shaft that extends through the crankshaft. The actuating shaft is rotatable with respect to the crankshaft about the crankshaft axis. It can be turned by a control mechanism in order to vary the compression ratio of the internal combustion engine. In case of running at fixed compression ratio the actuating shaft has a fixed angular position with respect to a crankcase of the engine. The number of teeth of the eccentric member gear, the first and second stage gears and the actuating gear are such that under operating conditions, in case of a standstill of the actuating gear, the eccentric member is rotated with respect to the crankpin at half speed of the speed of the crankshaft with respect to the crankcase and in opposite direction thereof. Hence, if the crankshaft rotates twice about the crankshaft axis, the eccentric member rotates once about the crankpin in opposite direction; as seen from the crankcase the eccentric member rotates once about the centreline of the crankpin in the same rotational direction as the crankshaft. It is noted that a standstill of the actuating gear means that the actuating gear has a fixed position with respect to the crankcase of the internal combustion engine.

Due to the eccentricity of the eccentric member its centre of gravity may be located at a distance from the first centreline. When the eccentric member is mounted to the crankpin of the engine this leads to a fluctuating centrifugal force on the eccentric member directed in radial direction from the crankshaft axis, which results into a fluctuating torque about the centreline of the crankpin under operating conditions when the direction of such centrifugal force is angled with respect to a plane that is spanned by the first and second centrelines.

Due to the relatively small actuating gear the fluctuating torque may lead to high force peaks on its gear teeth. This drawback typically increases in case of small high-speed engines, which may run at a speed of more than 6000 rpm, for example.

The present invention aims to improve the internal combustion as described above.

For this purpose the eccentric member according to the invention is characterized in that the high-lift section is provided with at least a slot which extends in its circumferential direction and/or wherein the low-lift section is provided with a counterweight.

Due to removal of material at the high-lift section and addition of material at the low-lift section the centre of gravity of the eccentric member may be shifted in a direction from the high-lift section to the low-lift section with respect to the eccentric member according to the prior art. This provides the opportunity to balance or even overbalance the eccentric member. The latter effect may be desired in order to balance other inertia torque contributions from other engine parts onto the eccentric member.

The first plane may form a plane of symmetry of the eccentric member such that the effect of the slot and/or the counterweight on the location of the centre of gravity does not shift from the first plane.

The counterweight may be formed by a widened portion of the annular driving body at the low-lift section.

The widened portion may be located at a side of the annular driving body where the outer wall is located. In this case at least at the low-lift section the annular driving body projects from the outer wall in radial direction thereof.

In a practical embodiment the annular driving body is an eccentric member gear being an outer gear. Nevertheless, the annular driving body may also be a pully or a sprocket, for example for being driven by means of a belt, toothed belt or a chain.

If the annular driving body is an eccentric member gear the widened portion may comprise a number of extensions of teeth of the eccentric member gear. This means that at least a number of teeth at the low-lift section is wider than at least a number of teeth at the high-lift section.

In an alternative embodiment the counterweight is located at a side of the annular driving body where the outer wall is located. The counterweight may be a partly annular element, which is made of a plate. It may be a separate part. The counterweight may be located between the annular driving body and the outer wall as seen in axial direction of the eccentric member.

The largest part of the slot, as measured in its longitudinal direction, and preferably the entire slot, may be located at the high-lift section. A slot that also extends into the low-lift section will counteract the intention to shift the centre of gravity in a direction from the line of maximum lift to the line of minimum lift.

The slot may be in the outer wall.

In an embodiment the slot is located at an axial end portion of the outer wall.

More particularly, the slot may be located next to the annular driving body. This means that the outer wall may be locally narrowed at the high-lift section.

In a particular embodiment the slot is located between axial ends of the outer wall.

The depth of the slot may increases in a direction towards the line of maximum lift. This is possible since the distance between the inner and outer walls increases in a direction towards the line of maximum lift.

If the slot is located between axial ends of the outer wall it may form an opening between the inner wall and the outer wall, such that it also functions as an oil passage when installed between the crankpin and the big end of a connecting rod of an engine.

In a preferred embodiment the slot is located in the outer wall at an axial end portion of the outer wall and next to the annular driving body and the counterweight is located at substantially the same location in axial direction of the eccentric member. In this case the slot narrows a supporting surface for bearing the big end of the connecting rod, whereas the reduced portion is used by the counterweight, i.e. the reduced portion may be filled with a partly annular element as described hereinbefore, for example, or it may be filled with a number of widened teeth in case the annular driving body is an outer gear. This provides a compact balanced eccentric member.

The slot and/or the counterweight may be adapted such that the centre of gravity of the eccentric member lies on the first centreline or beyond the first centreline as seen from the second centreline. In the latter case the eccentric member is overbalanced and in the former case the eccentric member is entirely balanced.

In an alternative embodiment the slot may be provided in an axial side of the eccentric member, for example within the annular driving body.

The invention is also related to an internal combustion engine including variable compression ratio, comprising a crankshaft being rotatable about a crankshaft axis and having a crankpin, wherein the crankshaft axis and a centreline of the crankpin span a crank plane, a connecting rod including a big end and a small end, a piston being rotatably connected to the small end of the connecting rod, an eccentric member as described hereinbefore, being rotatably mounted on the crankpin such that a centreline of the crankpin coincides with the first centreline of the eccentric member, wherein the big end of the connecting rod is rotatably mounted on the outer wall of the eccentric member such that a centreline of the big end coincides with the second centreline of the eccentric member, wherein the annular driving body is drivably coupled to a drive train for rotating the eccentric member with respect to the crankpin at a virtual standstill of the crankshaft.

The drive train may be adapted such that the eccentric member rotates with respect to the crankpin at half speed of the speed of the crankshaft and in opposite direction thereof.

In an embodiment the annular driving body is an eccentric member gear being an outer gear, wherein the drive train comprises an actuating gear which is drivably coupled to the eccentric member gear and fixed to an actuating shaft, wherein the actuating shaft is rotatably mounted to the crankshaft and rotatable about an axis which coincides with the crankshaft axis, wherein under operating conditions the actuating shaft stands still at fixed compression ratio.

The drive train may comprise a first stage gear that is fixed to a second stage gear and which has a larger diameter than the second stage gear, wherein the second stage gear meshes with the actuating gear and the first stage gear meshes with the eccentric member gear, whereas the second stage gear has a larger diameter than the actuating gear.

The first and/or second stage gears may be adapted such that their common centre of gravity is located eccentrically, for example by means of a cavity therein. This allows the first and/or second stage gears to generate a counter torque to the torque which is exerted by the eccentric member onto the first stage gear such that a resulting smaller torque is transferred to the actuating gear under operating conditions.

In practice the actuating gear may be located at the same side of a crank arm of the crankshaft as the eccentric member gear, whereas the actuating shaft extends through the crankshaft.

The number of teeth of the eccentric member gear, the first and second stage gears and the actuating gear may be such that under operating conditions the eccentric member rotates with respect to the crankpin at half speed of the speed of the crankshaft and in opposite direction thereof, since the relative motion of the eccentric member and the crankpin, on the one hand, and of the eccentric member and the connecting rod, on the other hand, is relatively small, which minimizes friction losses. In fact, bearings between the outer wall and the connecting rod and between the eccentric member and the crankpin experience half the crankshaft speed.

A centre of the outer wall in its axial direction may lie beyond a centre of the inner wall in its axial direction, as seen from the annular driving body.

The invention will hereafter be elucidated with reference to the schematic drawings showing embodiments of the invention by way of example.
Fig. 1 is a perspective view of an embodiment of an internal combustion engine according to the invention.
Fig. 2 is a similar view as Fig. 1, but showing a part thereof on a larger scale.
Fig. 3 is a similar view as Fig. 1, but showing a part thereof on a larger scale.
Fig. 4 is a perspective view of an embodiment of an eccentric member according to the invention, mounted in the internal combustion engine as shown in Fig. 1.
Fig. 5 is a side view of the eccentric member of Fig. 4 .
Figs. 6-10 are side views of an internal combustion engine of the prior art, illustrating different situations under operating conditions.
Figs. 11 and 12 are similar views as Figs. 6 and 8, respectively, but showing enlarged parts thereof.
Figs. 13 and 14 are enlarged sectional views of a part of the embodiment as shown in Fig. 1, illustrating different situations under operating conditions.
Figs. 15 and 16 are similar views as Fig. 4, but showing an alternative embodiment.

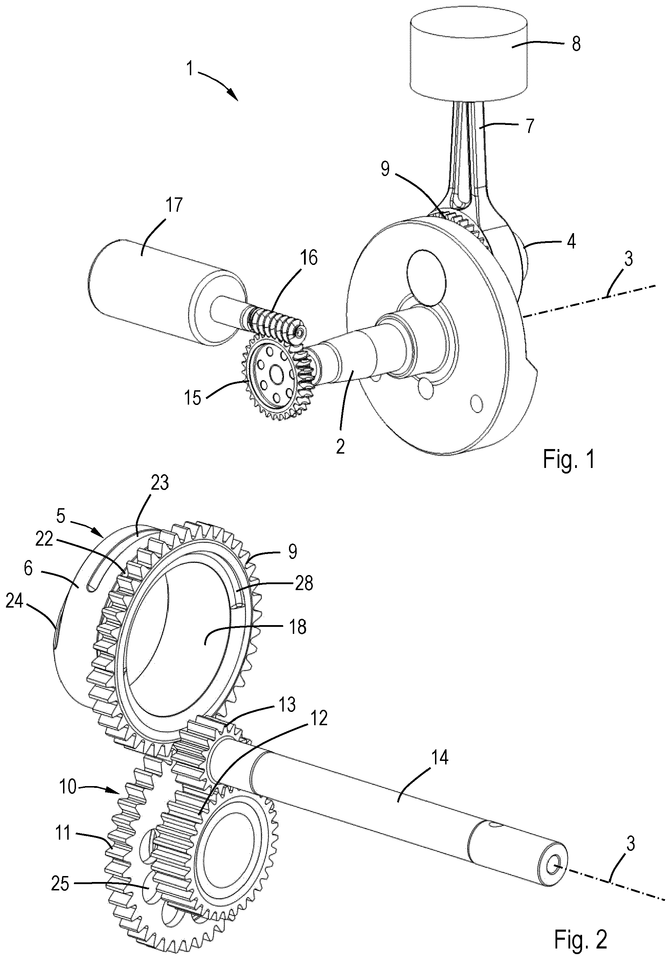

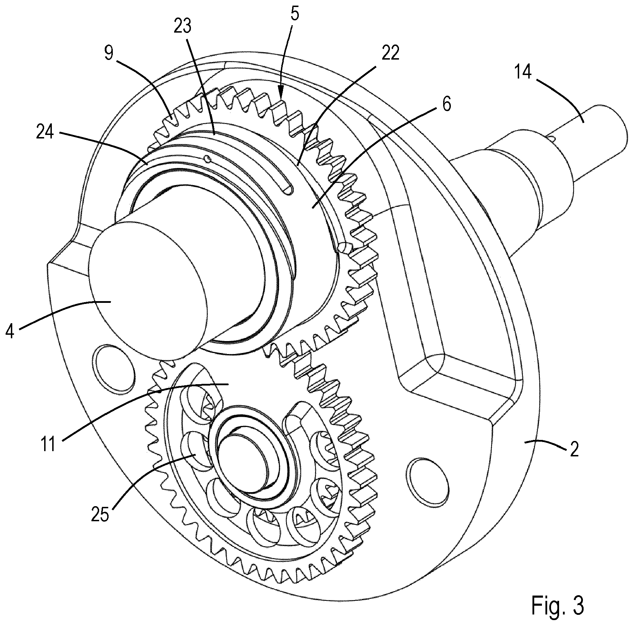

Fig. 1 shows an embodiment of a four-stroke internal combustion engine 1 including variable compression ratio according to the invention and Figs. 2 and 3 show parts thereof. The engine 1 comprises a crankshaft 2 which is rotatably mounted to a crankcase (not shown) and rotatable about a crankshaft axis 3. The crankshaft 2 has a crankpin 4 on which an eccentric member 5 is rotatably mounted. The eccentric member 5 is rotatable about a centreline of the crankpin 4 and has a cylindrical outer wall 6 that bears a big end of a connecting rod 7. The outer wall 6 is eccentrically disposed with respect to the crankpin 4.

The internal combustion engine 1 is further provided with a piston 8 which is rotatably connected to a small end of the connecting rod 7. In this case the engine 1 has a single cylinder but a multi-cylinder engine is also conceivable.

The eccentric member 5 is provided with an eccentric member gear 9 which is an outer gear and has an axis of rotation that coincides with the centreline of the crankpin 4. The eccentric member 5 is drivably coupled to a gear train 10 for rotating the eccentric member 5 with respect to the crankpin 4 at half speed of the speed of the crankshaft 2 and in opposite direction thereof. This means that if the crankshaft 2 rotates twice about the crankshaft axis 3 in clockwise direction, the eccentric member 5 rotates once about the crankpin 4 in anti-clockwise direction.

In the embodiment as shown in Figs. 1-3 the gear train 10 comprises a first stage gear 11 that meshes with the eccentric member gear 9 and has the same number of teeth as the eccentric member gear 9, a second stage gear 12 which is fixed to the first stage gear 11 and an actuating gear 13 which meshes with the second stage gear 12. The first stage gear 11 and the second stage gear 12 are rotatably mounted to the crankshaft 2 and have a common axis of rotation which is parallel to the crankshaft axis 3. The first stage gear 11 has a larger diameter and more teeth than the second stage gear 12, whereas the second stage gear 12 has a larger diameter and more teeth than the actuating gear 13. The actuating gear 13 is fixed to one end of an actuating shaft 14 that extends through the crankshaft 2. The actuating shaft 14 is rotatable with respect to the crankshaft 2 about the crankshaft axis 3.

A worm wheel 15 is fixed on the actuating shaft 14 at a distance from the actuating gear 13 and meshes with a worm 16 that is drivable by an electric motor 17. The eccentric member 5 and the first and second stage gears 11, 12 are located at the same side of a crank arm as the crankpin 4, whereas the worm wheel 15 is located at an opposite side thereof. The actuating shaft 14 can be turned by the electric motor 17 in order to vary the compression ratio of the internal combustion engine 1. This provides the opportunity to operate the internal combustion engine 1 at a high compression ratio under low load conditions in order to improve its efficiency. Under high load conditions, the compression ratio can be decreased to avoid detonations. In case of running at fixed compression ratio the actuating shaft 14 has a fixed angular position with respect to the crankcase.

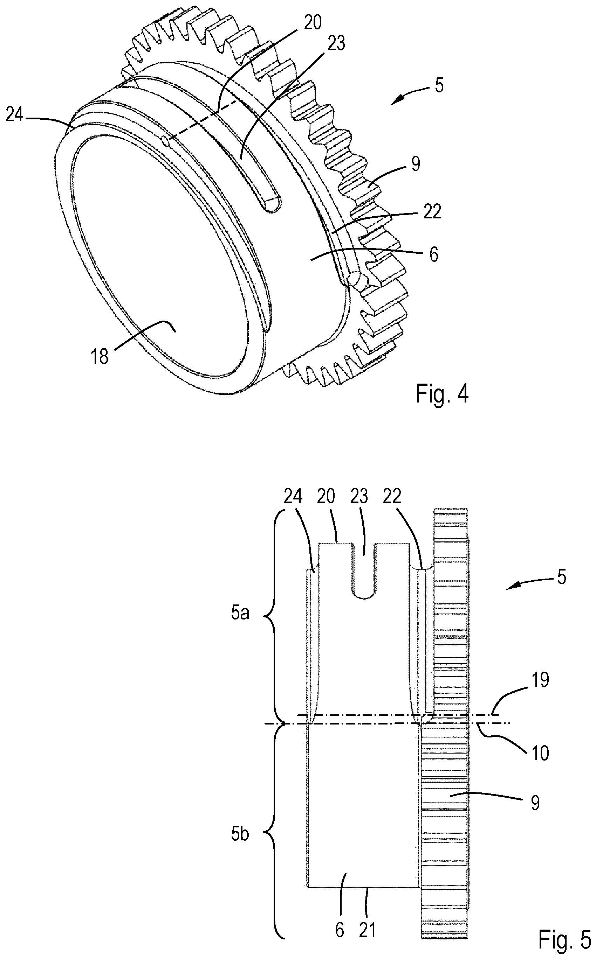

Figs. 4 and 5 show the eccentric member 5 as a separate part which is mounted between the crankpin 4 and the big end of the connecting rod 7. The eccentric member 5 has a cylindrical inner wall 18 which has a first centreline 10. The cylindrical outer wall 6 surrounds the cylindrical inner wall 18 and has a second centreline 19 which extends parallel to the first centreline 10. In assembled condition as shown in Fig. 1 the centreline of the eccentric member gear 9 and the first centreline 10 coincide with the centreline of the crankpin 4, whereas a centreline of the big end of the connecting rod 7 coincides with the second centreline 19. The eccentric member gear 9 is located next to the cylindrical outer wall 6 in axial direction thereof.

The first and second centrelines 10, 19 span a first plane which intersects the outer wall 6 at a line of maximum lift 20, where the distance between the inner wall 18 and the outer wall 6 is at its maximum, and a line of minimum lift 21, where the distance between the inner wall 18 and the outer wall 6 is at its minimum. A second plane within which the first centreline 10 lies and which extends perpendicularly to the first plane divides the eccentric member 5 in a high-lift section 5a in which the line of maximum lift 20 is located and a low-lift section 5b in which the line of minimum lift 21 is located, see Fig. 5.

Figs. 4 and 5 show that the high-lift section 5a is provided with three parallel slots in the outer wall 6: a first slot 22 which is located at an axial end portion of the outer wall 6 next to the eccentric member gear 9, a second slot 23 which is located between axial ends of the outer wall 6 and a third slot 24 which is located at an axial end portion of the outer wall 6 remote from the eccentric member gear 9. Each of the first to third slots 22-24 is entirely located at the high-lift section 5a, extends in circumferential direction of the outer wall 6 and is symmetrical with respect to the first plane. The second slot 23 forms an opening between the inner wall 18 and the outer wall 6 such that it can function as an oil passage between the crankpin 4 and the big end of the connecting rod 7. The first and third slots 22, 24 are longer than the second slot 23 in this case. The depths of the first and third slots increase in a direction towards the line of maximum lift 20.

Fig. 2 shows that the eccentric member also has a fourth slot 28, which is not provided in the outer wall 6, but at an axial side of the eccentric member 5 within the crank member gear 9 at the high-lift section 5a.

Figs. 4 and 5 show that the eccentric member gear 9 is wider at the low-lift section 5b than at the high-lift section 5a. The widened portion forms a counterweight. In this case the widened portion comprises extensions of teeth of the eccentric member gear at the low-lift section 5b.

The presence of the first to fourth slots 22, 23, 24 and 28 at the high-lift section 5a and the widened eccentric member gear 9 at the low-lift section 5b serve to displace the centre of gravity of the eccentric member 5 in a direction from the second centreline 19 towards the first centreline 10 with respect to a prior art configuration of the eccentric member without the first to fourth slots 22, 23, 24, 28 and the widened eccentric member gear 9. This provides the opportunity to balance the eccentric member gear 5 or even overbalance the eccentric member gear 5 such that its centre of gravity lies at the low-lift section 5b.

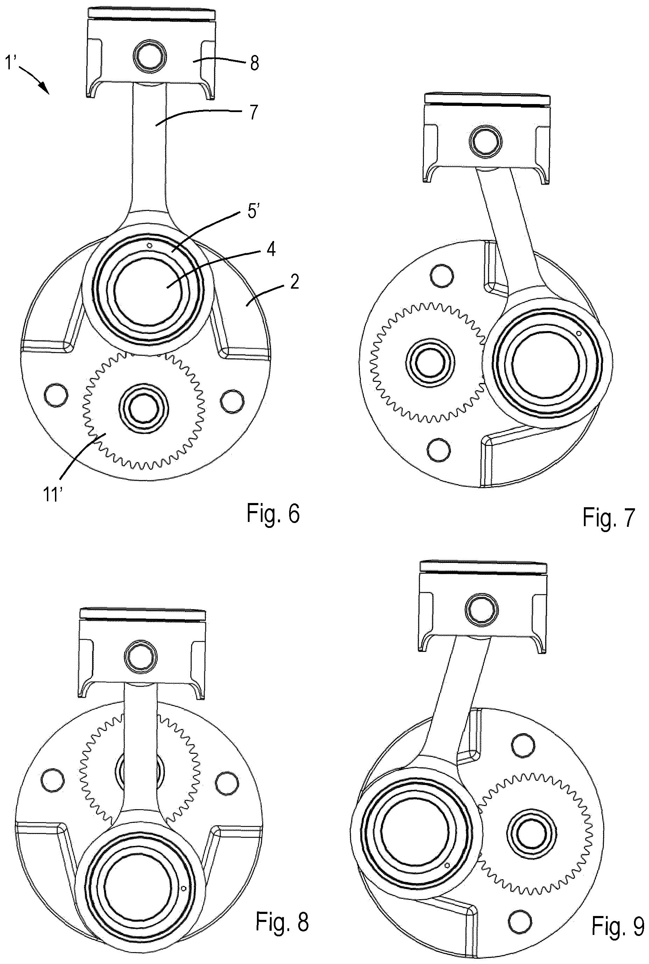

An advantage of balancing or overbalancing the eccentric member gear 5 will be explained below by means of Figs. 6-12 which show an engine 1' comparable to the embodiment of Fig. 1, but which is provided with an eccentric member 5' and a first stage gear 11' of the prior art.

Figs. 6-10 show successive situations of the engine 1' under operating conditions when the piston 8 moves from top dead centre, where firing starts, to bottom dead centre, where the exhaust stroke starts, and back towards top dead centre where the exhaust stroke ends. The figures show that during one revolution of the crankshaft 2 in clockwise direction the eccentric member 5' rotates by a half revolution about the crankpin 4 in anti-clockwise direction. Figs. 6-10 show a small circle on the eccentric member 5' which indicates an angular location where the distance between the inner wall 18 and the outer wall 6 has its maximum, i.e. at the line of maximum lift 20 as shown in Fig. 4.

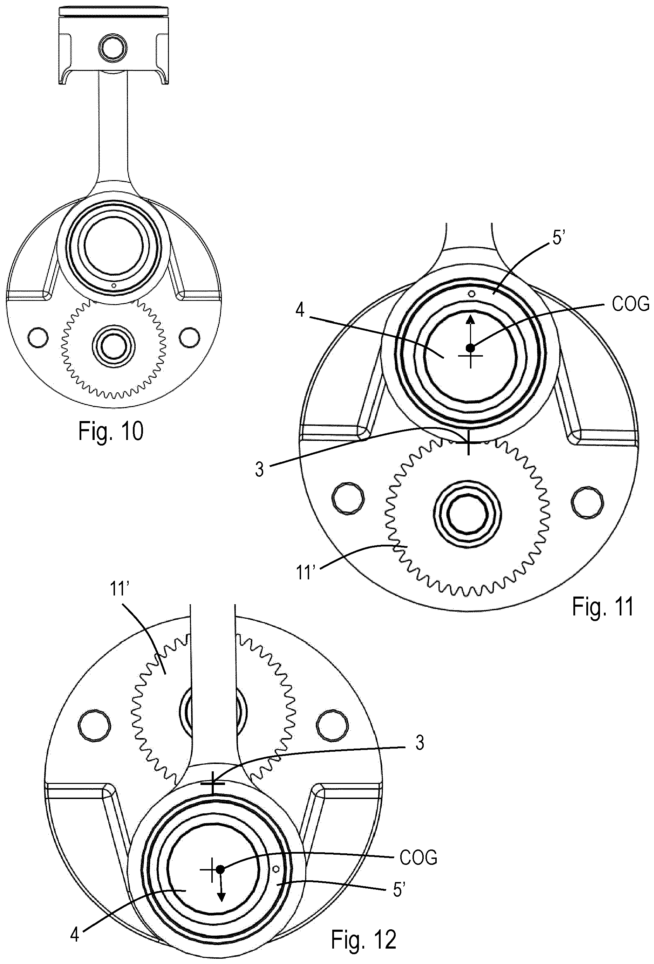

Figs. 11 and 12 show the situations as depicted in Figs. 6 and 8 again. In these figures the location of the centre of gravity of the eccentric member 5' is indicated by CoG, which lies eccentrically with respect to the centreline of the crankpin 4. When the internal combustion engine 1' is running the eccentrical centre of gravity CoG generates a fluctuating centrifugal force on the eccentric member 5', which is directed radially from the crankshaft axis 3. During periods in which the centre of gravity CoG lies outside a crank plane in which the crankshaft axis 3 and the centreline of the crankpin 4 lie, the centrifugal force leads to a fluctuating torque on the eccentric member 5' about the centreline of the crankpin 4. The fluctuating torque is transferred to the actuating gear 13 via the first and second stage gears 11', 12. Because of the relatively small diameter of the actuating gear 13 the fluctuating torque might lead to overload of its gear teeth, particularly at high engine speed.

Fig. 11 illustrates a condition at highest compression ratio in which at top dead centre of the piston 8 where firing starts the crankshaft axis 3, the centreline of the crankpin 4 and the centre of gravity CoG of the eccentric member 5' lie in the crank plane, whereas the centreline of the crankpin 4 lies between the crankshaft axis 3 and the centre of gravity CoG. Consequently, the centrifugal force on the eccentric member 5' is directed through the centreline of the crankpin 4, which means that in this situation it does not generate a torque about the centreline of the crankpin 4.

Fig. 12 shows a situation in which the piston 8 is in bottom dead centre. In this situation the centre of gravity CoG of the eccentric member 5' lies outside the crank plane that is spanned by the crankshaft axis 3 and the centreline of the crankpin 4. The centrifugal force in the centre of gravity CoG which is directed in radial direction from the crankshaft axis 3 generates a torque in clockwise direction which torque is transferred via the eccentric member gear 9 to the first stage gear 11'.

Returning to the eccentric member 5 according to the invention as shown in Figs. 4 and 5, it is clear that the presence of the first to fourth slots 22, 23, 24, 28 at the high-lift section 5a and the widened eccentric member gear 9 at the low-lift section 5b will shift the centre of gravity CoG in a direction from the high-lift section 5a towards the low-lift section 5b with respect to the prior art eccentric member gear 5', hence reducing the fluctuating forces on the actuating gear 13.

Figs. 2 and 3 show that the first stage gear 11 is provided with cavities 25 which serve to create an eccentrical centre of gravity thereof. Under operating conditions the eccentrical centre of gravity of the first stage gear 11 generates a centrifugal force on the first stage gear 11, i.e. a torque about an axis of rotation of the first stage gear 11. Since the first stage gear 11 and the eccentric member gear 9 have the same number of teeth and rotate opposite to each other under operating conditions the first stage gear 11 generates a counter torque to the torque which is exerted by the eccentric member 5 onto the first stage gear 11 such that a resulting smaller torque is transferred to the actuating gear 13. This effect is described in more detail by the applicant in European patent applications 20210071.5 and 20216846.4.

The invention also provides the opportunity to overbalance the eccentric member 5 in order to create a counter torque against a different inertial force onto the eccentric member 5, for example an inertial force that is generated by the piston 8 and/or the connecting rod 7. For example, under operating conditions the big end of the connecting rod 7 generates a centrifugal force which is directed from the crankshaft axis 3 to its centre of gravity, which at least partly acts onto the eccentric member 5 through the centreline of the big end. This leads to a torque on the eccentric member 5 when the direction of this centrifugal force is angled with respect to the plane that is spanned by the centrelines of the crankpin 4 and the big end. This condition would happen in the situation as shown in Fig. 12, for example. Hence, even if the eccentric member 5 is fully balanced by having its centre of gravity CoG at the first centreline 10, the big end can generate a torque on the eccentric member 5 due to a centrifugal force thereof.

Another example of other inertial forces onto the eccentric member 5 is inertia of the piston 8 and the connecting rod 7 due to their reciprocating motion, which inertial forces are highest in top dead centre and bottom dead centre of the piston 8. For example, in the situation as shown in Fig. 12 the inertial forces of the piston 8 and the connecting rod 7 are exerted in downward direction onto the eccentric member 5 and are directed through the centreline of the big end. This leads to a torque on the eccentric member 5 since the direction of the inertial forces are angled with respect to the plane that is spanned by the centrelines of the crankpin 4 and the big end. The resulting torque can at least partly be compensated by the eccentric member 5 and/or the first stage gear 11 as described hereinbefore.

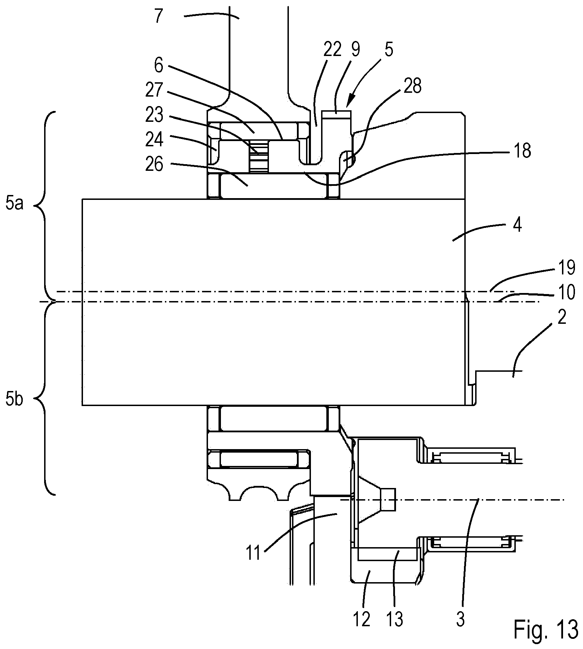

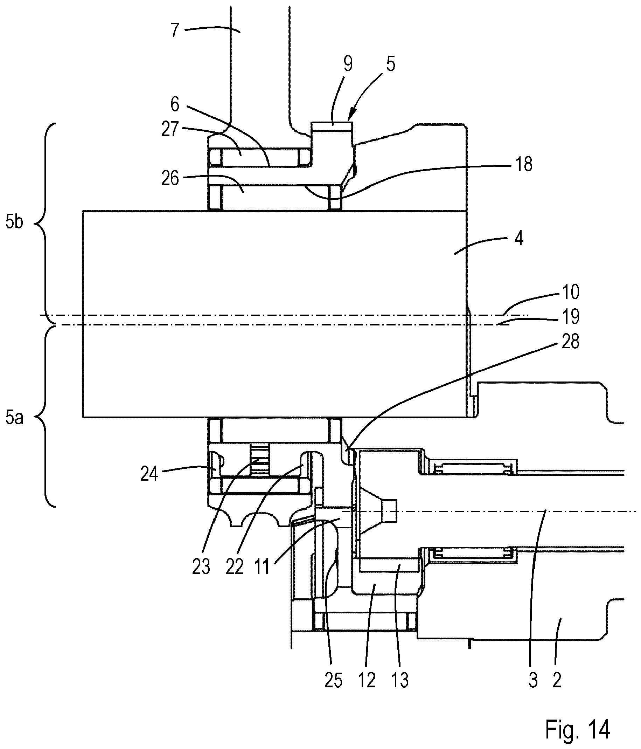

Figs. 13 and 14 show a part of the engine 1 where the eccentric member 5 is located in greater detail. It can be seen that the eccentric member 5 is supported by the crankpin 4 through an inner needle bearing 26 and that the big end is supported by the eccentric member 5 through an outer needle bearing 27. Fig. 13 shows a condition in which the piston 8 is in top dead centre where firing starts and Fig. 14 shows a condition in which the piston 8 is in top dead centre where the exhaust strokes ends. The width of the eccentric member gear 9 at the low-lift section 5b is slightly larger than the width of the first stage gear 11, see Fig. 13, whereas the width of the eccentric member gear 9 at the high-lift section 5a is smaller than the width of the first stage gear 11, see Fig. 14. This means that at high compression ratio, for example in case that the piston 8 is at top dead centre where firing starts and the line of maximum lift 20 lies in the crank plane and the second centreline 19 lies between the first centreline 10 and the line of maximum lift 20, as shown in Fig. 11, the widened portion of the eccentric member gear 9 meshes with the first stage gear 11 during the compression stroke and the combustion stroke. At lower compression ratio, for example in case that the piston 8 is at top dead centre where firing starts and the line of maximum lift 20 and the first centreline 10 lie in a plane that extends perpendicularly to the crank plane, the widened portion of the eccentric member gear 9 meshes with the first stage gear 11 during the combustion stroke and the exhaust stroke. In particular, when the widened portion of the eccentric member gear 9 meshes with the first stage gear 11 during the last part of the compression stroke and the first part of the combustion stroke this has a beneficial effect on durability of the eccentric member gear 9. Hence, the widened portion of the eccentric member gear 9 prevents overload of the actuating gear 13 as well as improves durability of the eccentric member gear 9.

Figs. 13 and 14 show that a centre of the outer wall 6 in its axial direction lies beyond a centre of the inner wall 18 in its axial direction, as seen from the eccentric member gear 9. In other words, in axial direction of the eccentric member 5, centres of the outer needle bearing 27 and the big end of the connecting rod 7 are shifted outwardly with respect to a centre of the inner needle bearing 26 as seen from the crank member gear 9. It is noted that a gear cage of the outer needle bearing 27 may be located in the big end of the connecting rod 7.

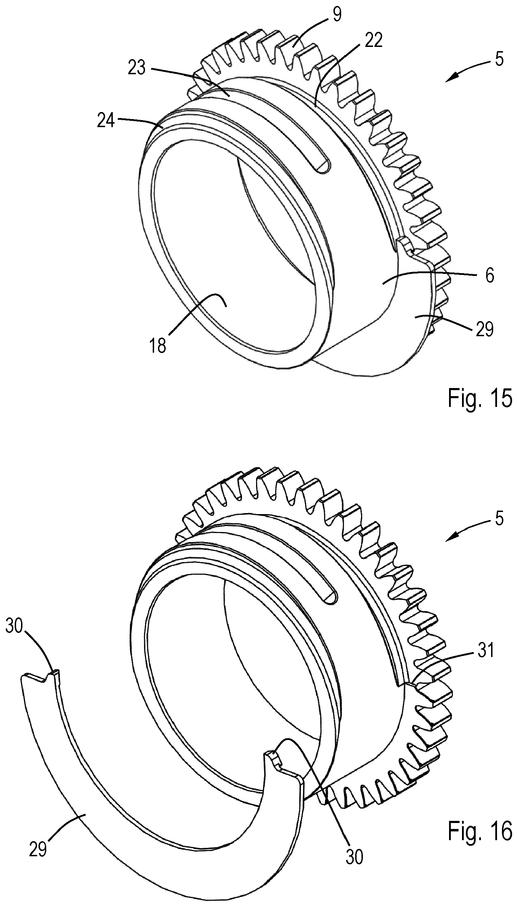

Figs. 15 and 16 show an alternative embodiment of the eccentric member 5. This embodiment is also provided with the first to fourth slots 22, 23, 24 and 28, but it does not have a widened portion of the eccentric member gear 9 at the low-lift section 5b. Instead of a widened portion it is provided with a counterweight in the form of a partly annular element 29, which is mounted as a separate part to an axial side of the eccentric member gear 9 such that it is located between the eccentric member gear 9 and the big end of the connecting rod 7 when mounted on the crankpin 4. The partly annular element 29 is located at the low-lift section 5b. Opposite ends of the partly annular element 29 comprise respective hooks 30 which fit in cooperating notches 31 at the axial side of the crank member gear 9 which is located at the same side as outer wall 6, see Fig. 15.

In the embodiments as described hereinbefore the first slot 22 is located at an axial end portion of the outer wall 6 and next to the eccentric member gear 9, whereas the annular element 29 or the widened portion of the eccentric member gear at the low-lift section 5b is located at substantially the same location in axial direction of the eccentric member 5. This is an efficient use of that part of the eccentric member 5, since the first slot 22 as well as the annular element 29 or the widened portion of the crank member gear 9 narrow a supporting surface for bearing the big end of the connecting rod 7, but together contribute to the balancing effect.

The invention is not limited to the embodiment shown in the drawings and described hereinbefore, which may be varied in different manners within the scope of the claims and their technical equivalents. For example, the arrangement and dimensions of the eccentric member gear and the gears of the gear train may be different. Furthermore, the number of slots, their locations and their shapes and dimensions may be different; similarly the shape and dimensions of the widened portion of the eccentric member gear or the counterweight may be different.

## Claims

1. An eccentric member (5) to be mounted between a crankpin (4) of a crankshaft (2) and a big end of a connecting rod (7) of an internal combustion engine (1) including variable compression ratio, comprising a cylindrical inner wall (18) having a first centreline (10), a cylindrical outer wall (6) having a second centreline (19) extending parallel to the first centreline (10) and an annular driving body (5) that is located next to the cylindrical outer wall (6) in axial direction thereof and having a centreline which coincides with the first centreline (10), wherein the first and second centrelines (10, 19) span a first plane which intersects the outer wall (6) at a line of maximum lift (20) and a line of minimum lift (21), wherein the first centreline (10) also lies within a second plane that extends perpendicularly to the first plane, which second plane divides the eccentric member (5) in a high-lift section (5a) in which the line of maximum lift (20) is located and a low-lift section (5b) in which the line of minimum lift (21) is located **characterized in that** the high-lift section (5a) is provided with at least a slot (22, 23, 24, 28) which extends in its circumferential direction and/or wherein the low-lift section (5b) is provided with a counterweight (9, 29).

2. An eccentric member (5) according to claim 1, wherein the counterweight is formed by a widened portion of the annular driving body (5) at the low-lift section (5b).

3. An eccentric member (5) according to claim 2, wherein the widened portion is located at a side of the annular driving body (5) where the outer wall (6) is located.

4. An eccentric member (5) according to any one of the preceding claims, wherein the annular driving body is an eccentric member gear (5) being an outer gear.

5. An eccentric member (5) according to claim 3 and 4, wherein the widened portion comprises a number of extensions of teeth of the eccentric member gear (5).

6. An eccentric member (5) according to claim 1, wherein the counterweight is located at a side of the annular driving body (5) where the outer wall (6) is located.

7. An eccentric member (5) according to any one of the preceding claims, wherein the largest part of the slot (22, 23, 24), as measured in its longitudinal direction, and preferably the entire slot (22, 23, 24, 28), is located at the high-lift (5a) section.

8. An eccentric member (5) according to any one of the preceding claims, wherein the slot (22, 23, 24) is in the outer wall (6).

9. An eccentric member (5) according to claim 9, wherein the slot (22, 24) is located at an axial end portion of the outer wall (6).

10. An eccentric member (5) according to claim 10, wherein the slot (22) is located next to the annular driving body (5).

11. An eccentric member (5) according to claim 9, wherein the slot (23) is located between axial ends of the outer wall, wherein the slot (23) may form an opening between the inner wall (18) and the outer wall (6).

12. An internal combustion engine (1) including variable compression ratio, comprising a crankshaft (2) being rotatable about a crankshaft axis (3) and having a crankpin (4), wherein the crankshaft axis (3) and a centreline of the crankpin (4) span a crank plane, a connecting rod (7) including a big end and a small end, a piston (8) being rotatably connected to the small end of the connecting rod (7), an eccentric member (5) according to any one of the preceding claims, being rotatably mounted on the crankpin (4) such that a centreline of the crankpin (4) coincides with the first centreline (10) of the eccentric member (5), wherein the big end of the connecting rod (7) is rotatably mounted on the outer wall (6) of the eccentric member (5) such that a centreline of the big end coincides with the second centreline (19) of the eccentric member (5), wherein the annular driving body (9) is drivably coupled to a drive train (10) for rotating the eccentric member (5) with respect to the crankpin (4) .

13. An internal combustion engine (1) according to claim 12, wherein the drive train (10) is adapted such that the eccentric member (5) rotates with respect to the crankpin (4) at half speed of the speed of the crankshaft (2) and in opposite direction thereof.

14. An internal combustion engine (1) according to claim 12 or 13, wherein the annular driving body is an eccentric member gear (5) being an outer gear, wherein the drive train comprises an actuating gear (13) which is drivably coupled to the eccentric member gear (5) and fixed to an actuating shaft (14), wherein the actuating shaft (14) is rotatably mounted to the crankshaft (2) and rotatable about an axis which coincides with the crankshaft axis (3), wherein under operating conditions the actuating shaft (14) stands still at fixed compression ratio.

15. An internal combustion engine (1) according to any one of the claims 12-14, wherein a centre of the outer wall in its axial direction lies beyond a centre of the inner wall in its axial direction, as seen from the annular driving body (5).
